Europäisches Patentamt

European Patent Office

Office européen des brevets

(19)

(11) **EP 0 621 476 B1**

(12) **EUROPÄISCHE PATENTSCHRIFT**

(45) Veröffentlichungstag und Bekanntmachung des Hinweises auf die Patenterteilung:
**03.07.2002 Patentblatt 2002/27**

(51) Int Cl.⁷: **G01N 29/00**, G01N 33/24, B22C 19/04, G01N 33/38

(21) Anmeldenummer: **94106041.0**

(22) Anmeldetag: **19.04.1994**

(54) **Verfahren und Vorrichtung zur Bestimmung formtechnologischer Eigenschaften von Giessereiformstoffen**

Method and device for determining technological properties of foundry molding materials

Procédé et dispositif pour déterminer des propriétés technologiques de matériaux de moulage de fonderie

(84) Benannte Vertragsstaaten:
**AT BE CH DE DK ES FR GB IT LI NL**

(30) Priorität: **21.04.1993 DE 4312939**
**21.04.1993 DE 4312938**

(43) Veröffentlichungstag der Anmeldung:
**26.10.1994 Patentblatt 1994/43**

(73) Patentinhaber: **Maschinenfabrik Gustav Eirich GmbH & Co KG**
**D-74736 Hardheim (DE)**

(72) Erfinder:
• **Flemming, Eckardt, Prof. Dr.-Ing. habil**
**D-09599 Freiberg (DE)**
• **Tilch, Werner, Dr.-Ing. hab.**
**D-09559 Freiberg (DE)**
• **Schuszter, Thomas, Dr.-Ing.**
**D-86187 Augsburg (DE)**
• **Ivanov, Marian, Dipl.Ing.**
**D-09599 Freiberg (DE)**

(74) Vertreter: **Weber, Dieter, Dr. et al**
**Weber, Seiffert, Lieke**
**Taunusstrasse 5a**
**65183 Wiesbaden (DE)**

(56) Entgegenhaltungen:
EP-A- 0 466 384      DD-A- 236 397
DD-A- 253 197        DE-A- 1 815 185
DE-A- 4 233 958      DE-B- 1 139 613
GB-A- 2 059 588

**Beschreibung**

2.1. Anwendungsgebiet der Erfindung

Die Erfindung betrifft eine Prüfmethode zur Eigenschaftsbestimmung von Giesserei-Formstoffsystemen und deren Komponenten durch Messung der elastischen und inelastischen Eigenschaften (Ausbreitung und Absorbtion elastischer Wellen) mittels Ultraschall unter Einbeziehung weiterer physikalischer und/oder technisch-technologischer Kennwerte. Die komfortable Durchführung der Messungen bei dieser Prüfmethode (zerstörungsfrei, schnell, automatisierbar) erlaubt die Entwicklung neuer Prüfsysteme für die Formstoffprüfung sowie zur Qualitätsüberwachung und -steuerung der Aufbereitung und der Form- bzw. Kernherstellung. Außerdem betrifft die vorliegende Erfindung eine Vorrichtung für die Charakterisierung von Gießereiformsand, insbesondere zum Bestimmen der Eigenschaften und/oder der Zusammensetzung von Gießereiformsand, mit einer Probennahmeeinrichtung und einer Prüfhülse, welche eine Formsandprobe, vorzugsweise in Form eines vorverdichteten Prüfkörpers aufnimmt.

2.2. Charakteristik der bekannten technischen Lösungen

Die verarbeitungstechnologischen Eigenschaften eines Formstoffes stellen eine Verknüpfung stofflicher, technologischer bzw. ausrüstungstechnischer Faktoren dar, die jeweils im Aufbereitungs-, Form- und/oder Gießprozeß wirksam werden. Über die Kette Formstoffzusammensetzung -Formstoffqualität - Formqualität wird gezielt auf die Gußstückqualität Einfluß genommen. Dazu werden Prüfkennwerte herangezogen, die auf stoffliche Veränderungen mit Auswirkungen auf formtechnologische Eigenschaften unmittelbar reagieren.
Die konventionelle Formstoffprüfung erfaßt das Stoffverhalten oft unter Bedingungen, die der Praxis angenähert sind. Der Zeitaufwand ist vergleichsweise hoch, die "Reaktionsempfindlichkeit" auf Störgrößen bzw. die Aussagefähigkeit auf eine Fehlerneigung eingeschränkt. Die auf Grundlage der fortgeschrittenen Meßtechnik entwickelten Methoden der angewandten Physik erlauben eine detaillierte Bestimmung physikalischer Eigenschaften und ihrer Beziehungen vor allem zu wirksamen physikalischen aber auch zu technisch-technologischen Parametern. Unter Berücksichtigung der gießereispezifischen Bedingungen lassen sich solche Verfahren für die Praxis der Formstoffprüfung und -steuerung anwenden, wobei sie entscheidende Vorteile gegenüber den herkömmlichen Prüfverfahren mit sich bringen (z. B. Möglichkeiten für einen automatischen Ablauf, stark verkürzte Prüfzeiten, u.a.). Deutlich wird das an der Feuchtemessung bei tongebundenen Formstoffen mittels eines elektromagnetischen Verfahrens bzw. an der Messung des Aushärtezustandes bei der Kernherstellung mittels eines elektrischen Verfahrens.

2.2.1. Tongebundene Formstoffe

Die Bestimmung der formtechnologischen Eigenschaften tongebundener Formstoffe erfolgt hauptsächlich über die Messung der Verdichtbarkeit und der Druckfestigkeit, wobei diese Größen wiederum vom Wassergehalt, den granulometrischen Kennwerten (Schlämmstoffgehalt) und vom bindefähigen Tonanteil (Aktivton) abhängig sind. Die in zahlreichen Gießereien angewendeten Sieb-, Sedimentations- und Adsorbtionsanalysen sind die gebräuchlichsten Verfahren zur Bestimmung dieser Kennwerte. Solche Prüfmethoden sind recht genau aber mit einem hohen, vor allem zeitlichen Aufwand verbunden und können nicht automatisiert bzw. zur prozeßbegleitenden Überwachung eingesetzt werden.
Bei den bisher bekannten automatischen Systemen zur Regelung optimaler Formstoffeigenschaften werden Messungen der Verdichtbarkeit und des Wassergehaltes, der Druck- und Scherfestigkeit bzw. der Verformungsgrenze vorgenommen. Diese Messungen erfolgen, mit Ausnahme der Bestimmung des Wassergehaltes, nach dem Mischen des Formstoffs und aus ihnen werden die Ton- und Wasserdosiermengen für die nachfolgenden Mischcharge abgeleitet. Ein Nachteil solcher Systeme ist, daß im Betrieb auftretende Schwankungen des Schlämmstoff- und Aktivtonanteils nicht oder nur ungenügend berücksichtigt werden, weil die Dosiermengen für die aktuelle Mischcharge von den Meßwerten der vorgehenden Chargen berechnet werden. Um diesem Nachteil entgegenzuwirken, werden Prozeßdaten (z. B. Sand/Gußverhältnis und in die Form eingelegte Kernmenge) verwendet. Die Zuordnung dieser Daten zu den einzelnen Mischchargen ist jedoch mit Unsicherheit verbunden (z. B. Kernsandaustrag aus dem Formstoffkreislauf, Vermischung des Gießerei-Altsandes während des Transportes), so daß man in der Praxis mit ungenauen Werten arbeiten muß, was natürlich den Erfolg der Steuerung ungünstig beeinflußt.
Einen Lösungsweg zur Realisierung einer prozeßbegleitenden Bestimmung der Gießerei-Altsandqualität zeigt DD-PS 253197. Darin wird ein Verfahren zur Online-Bestimmung des Wasser-, Schlämmstoff- und Aktivtongehaltes des Gießerei-Altsandes vorgeschlagen, bei dem man die Schwächung der Röntgen- oder Gammastrahlung sowie die Ultraschallgeschwindigkeit an Formstoffproben ermittelt. Die Umsetzung dieses Meßkonzepts scheitert an dem erhöhten meßtechnischen Aufwand für die radiometrische Messung (Sicherheitsbestimmungen, Wartungskosten).

2.2.2. Kunstharz- und wasserglasgebundene Formstoffe

Zur Kontrolle der Gleichmäßigkeit und Güte von organischen Bindemitteln sowie der wasserglasgebundenen Formstoffe werden Bestimmungen der mechanischen Eigenschaften an Probekörpern solcher Formstoffmischungen vorgenommen. Es handelt sich vorwiegend um die Biegefestigkeitsprüfung aber auch um andere Festigkeitsmessungen (z. B. Scher- und Druckfestigkeit). Es werden außerdem die rheologischen Eigenschaften (z. B. Verformbarkeitsprüfung, Verarbeitbarkeitsdauer) der Formstoffmischungen untersucht. Da die Bestimmung der durch die Härtung erreichbaren Festigkeit ein wesentliches Kriterium für die Formstoffqualität ist, wird in der Praxis eine Härtungscharakteristik ermittelt, wobei man die erreichte Festigkeit in Abhängigkeit von der Aushärtedauer darstellt. Messungen in situ nach diesen Prüfmethoden sind nicht möglich. Eine Automatisierung bzw. On-line-Durchführung zur Kontrolle und Steuerung ist z. T. kostenungünstig oder nicht realisierbar.

Einen Vorschlag zur Durchführung einer prozeßbegleitenden Bestimmung und Steuerung der Kernsandqualität zeigt DE-PS 3152073. Darin wird die notwendige Aushärtezeit durch Messung der Größe der elektrischen Leitfähigkeit an einem Probekörper vor und nach dessen Erhärtung mit gleichzeitiger Bestimmung eines Änderungsbereiches dieser Größe ermittelt. Die Größe der elektrischen Leitfähigkeit entspricht einem Härtegrad des Kernes, der das Erreichen von vorher festgelegten Festigkeitseigenschaften für den Kem sichert, und wird damit als Steuergröße für die Kernqualität verwendet. Als Nachteil dieser Methode ist die fehlende Flexibilität bei der Auswertung der elektrophysikalischen Eigenschaften im Hinblick auf Anwendungen für andere Formstoffsysteme zu erwähnen.

### 2.2.3. Gießerei -Altsand-Regenerierung

Zur Bewertung des Regenerierungseffektes werden zur Zeit ausschließlich die Gießerei-Altsandkenngrößen "abschlämmbare Substanz" und "Glühverlust" angewendet. Die Prüfmethoden für eine Bestimmung dieser Kenngrößen sind aus der konventionellen Prüfung tongebundener Formstoffe bekannt und tragen alle Vor- und Nachteile dieser Meßverfahren mit sich, siehe Abschnitt 2.2.1.

Prüfvorrichtungen der obern erwähnten Art, die in vielen Fällen bereits weitgehend automatisiert sind, finden in Gießereien verbreitete Anwendung. Dabei wird beispielsweise eine an beiden Stirnseiten offene, zylidrische Prüfhülse vollständig, aber zunächst ohne Anwendung von Druck mit Formsand gefüllt. Die offene Unterseite der Prüfhülse wird zu diesem Zweck zumindest vorübergehend durch eine Druckplatte oder dergleichen verschlossen. Anschließend wird die so gefüllte Hülse zu einer Verdichtungsstation überführt, wo ein Stempel von der offenen Oberseite der Prüfhülse her auf den Formsand herabgedrückt wird und diesen verdichtet. Durch Messung des Weges, den der Druckstempel dabei in der Prüfhülse zurücklegt, wird die Verdichtbarkeit des Formsandes bestimmt.

In einer weiteren Station kann auch noch die Scherfestigkeit des verdichteten Prüfkörpers gemessen werden, indem beispielsweise der Prüfkörper durch den Druckstempel oder einen anderen Stempel nach unten aus der Hülse herausgedrückt wird, nachdem die die Hülse zunächst verschließende Druckplatte entfernt bzw. die Prüfhülse mit dem Prüfkörper von der Druckplatte abgenommen wurde. Der unten aus der Prüfhülse herausstehende Teil des Prüfkörpers kann dann durch eine seitlich angreifende Gabel abgeschert werden, wobei die auf die Gabel wirkenden Kräfte gemessen werden. Neben der Messung der Scherfestigkeit können auch weitere automatische Meßstationen vorgesehen sein, beispielsweise zum Bestimmen der Feuchtigkeit und anderer Parameter mit Hilfe verschiedener Sensoren und einschließlich berührungsfreier oder mit Berührung arbeitender Meßverfahren.

Einige der Meß- und Untersuchungsverfahren sind jedoch relativ aufwendig, insbesondere wenn man Aufschluß über die Zusammensetzung des Formsandes haben möchte,- wobei vor allem der Gehalt an Aktivbetonit und Schlemmstoffen interessiert. Der Gehalt an Aktivbetonit und Schlemmstoffen hat erheblichen Einfluß auf die formtechnologischen Eigenschaften des Formsandes und seine Eignung beispielsweise für sogenannte Kerne, die innere Hohlräume von Gußteilen bilden. Es besteht daher ein Bedürfnis nach einer Vorrichtung, welche ein schnelleres und einfacheres Bestimmen von Eigenschaften des Formsandes erlaubt, die für eine geplante Verwendung wesentlich sind.

In der GB 2 059 588 A ist eine Vorrichtung zur Bestimmung der Kompressibilität mittels Ultraschallsignalen gezeigt. Die DD 236 397 A1 offenbart ein Verfahren zur berührungslosen akustischen Messung von mechanischen Kennwerten eines Schüttgutes, porösen Stoffes oder Haufwerkes. Dabei wird die durch den unbekannten Stoff erfolgende Beeinflussung des Luftschalls im Hörfrequenzgebiet bestimmt und daraus mechanische Kennwerte, wie Hohlraumvolumen, Formfaktoren oder Struktur bestimmt.

### 2.3. Ziel der Erfindung

Ziel der Erfindung ist eine Prüfmethode zur Eigenschaftsbestimmung von Giesserei-Formstoffsystemen und deren Komponenten, die den Forderungen einer Qualitätssicherung bei den flexiblen, leistungsstarken Form- und Kernherstellungsanlagen, insbesondere hinsichtlich einer prozeßbegleitenden Kontrolle und Steuerung, gerecht wird. Sie soll durch eine Ermittlung physikalischer Eigenschaften und ihrer Beziehungen zu technisch-technologischen Parametern unter möglichst geringem technischen und zeitlichen Aufwand für die Vielfalt der Giesserei-Formstoffsysteme anwendbar sein. Dabei sollen mit Hilfe der Ermittlung von Ultraschallkennwerten an definierten Prüfkörpern sowie an Formen bzw. Kernen exakte Aussagen zu den Formstoffeigenschaften (Zusammensetzung, Festigkeitsverhalten) gewonnen werden, die eine Kontrolle und Steuerung der Formstoffqualität ermöglichen.

<u>2.4. Darlegung des Wesens der Erfindung</u>

Der Erfindung liegt die Aufgabe zugrunde, eine Prüfmethode zur Eigenschaftsbestimmung von Giesserei-Formstoffsystemen und deren Komponenten zu schaffen, auf deren Basis Prüfverfahren für die einzelnen Giesserei-Formstoffsysstemen entwickelt und zur Qualitätssicherung bei den flexiblen leistungsstarken Form- und Kernherstellungsanlagen eingesetzt werden.

Hinsichtlich des Verfahrens wird die Aufgabe erfindungsgemäß dadurch gelöst, daß man zunächst eine Probe des Giesserei-Formstoffsystems kompaktiert bzw. zusammengedrückt und die Länge der so zusammengedrückten Probe entlang zumindest einer Richtung bestimmt und das Fortschreiten und die Absorption von elastischen Wellen mit Hilfe von Ultraschall entlang dieser Richtung mißt, und daß diese Messung in Kombination mit zumindest einer weiteren Eigenschaft der Zusammensetzung verwendet wird, um zusätzliche Eigenschaften des Giesserei-Formstoffsystems zu berechnen. Die Bestimmung der Ultraschallgeschwindigkeit erfolgt an definierten Proben bzw. in situ unter definierten Ankopplungsbedingungen (Ankopplungsdruck und -dauer) und mit einer vorgegebenen Ultraschallfrequenz. Erfindungsgemäß werden in Abhängigkeit vom zu untersuchenden Gießerei-Formstoffsystem folgende Bestimmungsverfahren ermittelt:

Hinsichtlich der Vorrichtung wird die obige Aufgabe dadurch gelöst, daß die Vorrichtung eine Probennahmeeinrichtung, eine Prüfhülse, die die Formsandprobe aufnimmt, einen Verdichtungsstempel und eine Druckplatte für die Verdichtung der Probe innerhalb der Hülse, um eine verdichtete Probe mit einer ersten und einer zweiten Stirnfläche und einer Seitenwand zu bilden, die einen Prüfkörper definiert sowie mindestens einen Ultraschallwandler, der an einer Stirnfläche der Probe angeordnet ist, und Einrichtungen zur Bestimmung des Abstandes zwischen den beiden Stirnflächen und Einrichtung zur Bestimmung der Durchtrittszeit eines Ultraschallpulses durch die Probe von einer Stirnfläche zu der anderen aufweist.

<u>I.Tongebundene Formstoffe</u>

Dem Formstoff bzw. Gießerei-Altsand wird die Verdichtbarkeit, der Wassergehalt und die Ultraschallgeschwindigkeit bestimmt und daraus die granulometrischen Eigenschaften (Schlämmstoffgehalt bzw. Feinanteile) und der Aktivtongehalt ermittelt.
Zur Messung der entsprechenden Größen wird aus dem Formstoff bzw. Gießerei-Altsand eine Probe genommen, in eine Form mit definiertem Volumen geschüttet und mit einer vorgegebenen Kraft verdichtet (Bestimmung der Verdichtbarkeit). Die verdichtete Probe wird unter definierten Ankopplungsbedingungen (Ankopplungsdruck und -dauer) und mit einer vorgegebenen Ultraschallfrequenz durchschallt. Dabei wird die Ultraschallgeschwindigkeit der Probe gemessen. Die Bestimmung des Wassergehaltes kann während der Probeherstellung oder vorher erfolgen.
Die Ermittlung der granulometrischen Kennwerte (Schlämmstoffgehalt bzw. Feinanteile) erfolgt über den Zusammenhang:

***gran. Kennwerte = f(Wassergehalt, Ultraschallgeschwindigkeit).***

Die Ermittlung des Aktivtongehaltes erfolgt unter der Bedingung bekannter granulometrischen Kennwerte über den Zusammenhang:

***Aktivton = f(Verdichtbarkeit, Ultraschallgeschwindigkeit)***

oder

***Aktivton = f(Wassergehalt, Verdichtbarkeit).***

Für die Ermittlung der granulometrischen Kennwerte und des Aktivtongehaltes werden vorher Ausgleichsgeraden mit Hilfe von Testmischungen bekannter Zusammensetzung aus dem zu untersuchenden Formstoff bestimmt und nach den üblichen Interpolationsmethoden verwendet.
Die ermittelten granulometrischen Kennwerte und der Aktivtongehalt können zusammen mit dem Wassergehalt und der Verdichtbarkeit als Steuergröße zur Zusammenstellung der Formstoffcharge bei der Aufbereitung verwendet werden.

<u>II. Kunstharz- und wasserglasgebundene Formstoffe</u>

<u>II.a. Verfolgung und Kontrolle des Verfestigungsaublaufes. Ermittlung der Härtungscharakteristik</u>

Der frisch aufbereiteten Formstoffmischung wird eine Probe entnommen. In Abhängigkeit vom verwendeten Verfestigungsverfahren wird die Probe vor oder kurz nach dem Eintreten des Verfestigungsprozesses in eine Form mit definiertem Volumen geschüttet und mit einer vorgegebenen Kraft verdichtet. Die verdichtete Probe wird unter definierten Ankopplungsbedingungen (Ankopplungsdruck und -dauer) und mit einer vorgegebenen Ultraschallfrequenz durchschallt. Dabei wird die Ultraschallgeschwindigkeit der Probe gemessen. Die Messung der Ultraschallgeschwindigkeit erfolgt kontinuierlich und so lange bis die Aushärtereaktion beendet ist. Die so aufgenommene Ultraschallgeschwindigkeitswerte werden in Abhängigkeit von der Aushärtedauer dargestellt. Mit Fortschreiten der Aushärtung nimmt die Ultraschallgeschwindigkeit zu. Die Neigung deraufgenommenen Ultraschallgeschwindigkeit-Aushärtezeit-Kurve ist ein Maß für die auf den Aushärteprozeß wirkenden Störgrößen (z. B. Schlämmstoffgehalt des Quarzsandes). Die Ultraschallgeschwindigkeit zu einem bestimmten Zeitpunkt der Aushärtung entspricht dem erreichten Festigkeitsniveau und ersetzt damit die bei den konventionellen Prüfmethoden verwendeten Festigkeitsprüfungen.

II.b. Verfolgung und Kontrolle des Verfestigungsablaufes an Form oder Kernteilen

Die Aufnahme der in Punkt II.a eingeführten Härtungscharakteristik läßt sich auch an Form- oder Kernteilen durchführen. Ihre Aussagen dienen damit dem Erreichen vorgegebener Festigkeitseigenschaften. Zusätzlich läßt sich das Auftreten von Rissen in dem durchschallten Abschnitt des Form- oder Kernteils durch einen sprunghaften Abfall der Ultraschallgeschwindigkeit mühelos erkennen.

2.5. Ausführungsbeispiel: tongebundene Formstoffe

Bei der Aufbereitung tongebundener Formstoffe müssen durch Zudosierung von Wasser, Formgrundstoff und Ton zu dem Gießerei-Altsand die formtechnologischen Eigenschaften korrigiert werden. Diese Eigenschaften sind aber nur steuerbar, wenn im Betrieb auftretende Schwankungen des Schlämmstoffgehaltes berücksichtigt werden und danach der Wassergehalt eingestellt wird. Außerdem muß der aktuelle Aktivtonanteil berücksichtigt und die Festigkeit durch gezielte Dosierung von Ton eingestellt werden.

Beim vorliegenden erfindungsgemäßen Verfahren wird über eine Probenahmeeinrichtung vor dem Mischer Gießerei-Altsand oder nach dem Mischer Formstoff entnommen und auf ein konstantes Probevolumen gebracht. Anschließend erfolgt eine Verdichtung mittels eines Kolbens. An der verdichteten Probe wird mit Hilfe eines Sensors, der auf der Basis der Dielektrizitätskonstante arbeitet, der Wassergehalt des Gießerei-Altsandes oder des Formstoffes bestimmt. Die Bestimmung des Wassergehaltes erfolgt unter Einbeziehung der Temperatur des Gießerei-Altsandes oder des Formstoffes, die durch eine Temperatursonde gemessen wird. Im Fall einer Prüfung vom Formstoff kann die Wassergehaltbestimmung auch während des Mischens erfolgen. In einem nächsten Schritt werden an der Probe unter definierten Ankopplungsbedingungen (Ankopplungsdruck und -dauer) Ultraschallmeßköpfe angekoppelt. Dabei wird mittels eines induktiven Wegaufnehmers die Höhe der Probe ermittelt und daraus die Verdichtbarkeit ausgerechnet. Anschließend wird die Probe mit einer vorgegebenen Ultraschallfrequenz durchschallt und die Ultraschall-Laufzeit ermittelt. Aus der Laufzeit unter Einbeziehung der Probehöhe wird die Ultraschallgeschwindigkeit bestimmt.

Mit Hilfe eines Ultraschallwandlers der erfindungsgemäßen Vorrichtung ist es möglich, die Ausbreitungsgeschwindigkeit und die Dämpfung von Ultraschallwellen in dem Formsandkörper zu messen und daraus auf die elastischen und inelastischen Eigenschaften des Formsandes zu schließen, die entweder unmittelbar als charakterisierende Eigenschaften für die Eignung des Formsandes für bestimmte Zwecke dienen oder aber aufgrund von Erfahrungswerten oder entsprechenden Versuchsreihen Rückschlüsse auf den Gehalt an Aktivbetonit und Schlemmstoffen zulassen. Es hat sich gezeigt, daß der Zusammenhang zwischen Ultraschallgeschwindigkeit und -dämpfung bei geeigneten Prüfbedingungen eindeutige Rückschlüsse auf die Eignung des Formsandes für die Verwendung zu bestimmten Zwecken zuläßt und insbesondere auch Aufschluß darüber gibt, welche Bestandteile dem Formsand ggf. noch zuzusetzen sind, damit er die gewünschten Eigenschaften erhält. Als Zusatzstoffe kommen die bereits erwähnten Stoffe Aktivbetonit und Schlemmstoffe sowie Neusand und Wasser infrage. Indirekt erlauben also die Ultraschallmessungen auch einen Rückschluß auf die Zusammensetzung des Formsandes, die dann in gewünschter Weise verändert werden kann. Dabei ist die Ultraschallmessung eine sehr schnelle, mit wenig apparativem Aufwand verbundene Meßmethode, vor allem wenn man sie mit anderen, quantitativen Analyseverfahren vergleicht, die ansonsten notwendig sind, um verläßliche Rückschlüsse auf die zusammensetzung des Formsandes ziehen zu können.

Bevorzugt ist eine Ausführungsform der Erfindung, bei welcher zwei Ultraschallwandler an zwei gegenüberliegenden Seiten des Prüfkörpers angeordnet sind. Einer dieser Wandler kann dann als Sender fungieren, während der andere, gegenüberliegende Wandler als Empfänger dient, wobei die Laufzeit durch den Prüfkörper, die Amplitudenänderung beim Verlauf durch den Prüfkörper und ggf. auch etwaige Phasensprünge etc. erfaßt werden. Es ist jedoch auch möglich, lediglich mit einem einzigen Ultraschallwandler entsprechende Messungen vorzunehmen, in dem der Wandler lediglich einen kurzen Impuls aussendet und anschließend die aus dem Prüfkörper zurücklaufenden Echos empfängt, die in einer entsprechenden Elektronik analysiert werden. Zweckmäßiger Weise wird in einem solchen Fall auf der dem Wandler gegenüberliegenden Seite des Prüfkörpers eine den Ultraschall gut reflektierende Fläche angeordnet.

In der bevorzugten Ausführungsform ist die Prüfhülse im wesentlichen zylindrisch, wobei der oder die Ultraschallwandler an Platten oder Stempeln angeordnet sind, die an den Stirnseiten des zylindrischen Prüfkörpers anliegen. Dabei kann eine dieser Flächen bzw. Platten zu einem Verdichtungsstempel gehören, während die gegenüberliegende Platte eine Druckplatte bzw. Gegendruckplatte ist, wobei der Stempel und die Druckplatte Teile einer Verdichtungsprüfstation sind. Beispielsweise kann eine zylindrische Prüfhülse mit beidseitig offenen Enden auf eine Druckplatte gestellt werden, und wird anschließend mit gesiebtem und/oder von Klumpen befreiten Formsand gefüllt, wobei ein Abstreifer dafür sorgt, daß die Hülse gleichmäßig und exakt randvoll gefüllt ist. Die Hülse wird in diesem Zustand zu der Verdichtungsstation transportiert, wo ein möglichst genau in die zylindrische Hülse passender Stempel auf die Stirnfläche des Prüfkörpers aufgesetzt und in die Hülse hineingedrückt wird. Dabei wird der Formsand verdichtet und die Verdichtbarkeit ergibt sich aus dem Verhältnis des bei einem vorgegebenen Prüfdruck ergebenden Volumens des Prüfkörpers zum Gesamtvolumen der Prüfhülse, das zuvor von dem Formsand beansprucht wurde. Dabei kann der Ultraschallwandler unmittelbar in dem Druckstempel der Verdichtungsprüfstation angeordnet sein, während ein weiterer Ultraschallwandler beispielsweise in der Druckplatte an der Unterseite der Prüfhülse angeordnet ist. Zweckmäßig ist es dabei außerdem, wenn das Druckregelsystem, welches den Prüfdruck festlegt, mit welchem der Stempel auf die Sandprobe gedrückt wird, eine mindestens zweistufige Druckregelung aufweist, so daß man für die Ultraschallmessung einen von dem für die Verdichtung vorgesehenen Prüfdruck unabhängigen Druck wählen kann, der im allgemeinen kleiner ist als der zur Verdichtung der Probe aufgebrachte Druck.

Man kann jedoch ohne weiteres auch die Ultraschallwandler in von der Verdichtungsstation unabhängigen Flächen anordnen, insbesondere wenn zu befürchten ist, daß durch den beim Verdichten aufgebrachten Druck die mit dem Sand in Berührung kommenden Wandlerflächen beschädigt werden oder eine entsprechende Schutzschicht nicht aufgebracht werden kann oder das Meßergebnis zu sehr verfälschen würde.

Der Einfachheit halber könnte in einem solchen Fall der Ultraschallwandler an einem Stempel und einer entsprechenden Gegenplatte einer Station für die Messung der Scherfestigkeit des Prüfkörpers angeordnet sein. Für die Messung der Scherfestigkeit wird nämlich der Prüfkörper durch einen Stempel aus der Prüfhülse herausgedrückt, wobei der hierfür aufzubringende Druck wesentlich geringer ist als der für die Verdichtung erforderliche Druck. Vor dem Herausdrücken des Prüfkörpers aus der Hülse könnte also beim Anlegen des entsprechenden Stempels und einer geeigneten Gegenplatte an der Unterseite der Hülse die gewünschte Ultraschallmessung erfolgen, so daß erst anschließend unter Festhalten der Hülse und Herabdrücken des Stempels der Scherfestigkeitsstation der Prüfkörper nach unten aus der Hülse herausgedrückt wird, wobei selbstverständlich auch die Gegenplatte mit bewegt werden muß oder vorw erg bereits abgenommen worden ist.

Bei der Messung der Scherfestigkeit fährt dann eine Gabel seitlich gegen den Prüfkörper und mißt die beim Abscheren auftretenden Kräfte.

Gemäß einer anderen Ausführungsform der Erfindung weicht der Querschnitt der Hülse leicht von der zylindrischen Form ab, indem gegenüberliegende Teile der Zylindermantelfläche abgeflacht sind, während im übrigen der zylindrische bzw. kreisförmige Querschnitt der Prüfhülse erhalten bleibt. Die Ultraschallwandler können dann in üblicher Weise an den durch die abgeflachten Bereiche gebildeteten ebenen Flächen angeordnet werden. Gleichzeitig ist der Querschnitt der Hülse über die gesamte Länge konstant, so daß der Prüfkörper ohne w eiteres unbeschädigt durch einen entsprechenden, passenden Stempel aus der Hülse herausgedrückt werden kann.

Bei einer anderen Ausführungsform der Erfindung sind zwei Ultraschallwandler nebeneinander auf ein und derselben oder auf dicht benachbarten Flächen angeordnet, wobei der eine Ultraschallwandler als Sender und der andere als Empfänger dient. Auch in diesem Fall ist es wiederum zweckmäßig, wenn auf der den Ultraschallwandlern gegenüberliegenden Seite des Prüfkörpers eine den Ultraschall gut reflektierende Fläche angeordnet ist.

Weitere Vorteile, Merkmale und Anwendungsmöglichkeiten der vorliegenden Erfindung werden deutlich aus der folgenden Beschreibung, verschiedener Ausführungsformen, eines Ausführungsbeispiels und der dazugehörenden Figuren. Es zeigen:

Fig 1:      Eine automatische Prüfeinrichtung für Formsand mit mehreren Stationen, wobei eine Ultraschallmeßeinrichtung in einer der Stationen vorgesehen ist, und

Figuren 2 bis 4      verschiedene Anordnungen von Ultraschallwandlern an entsprechenden Stationen einer Formsandprüfeinrichtung,

Fig. 5      einen Ultraschallmeßstempel mit Heizeinrichtung.

Fig. 6      graphisch den Zusammenhang zwischen Ultraschallgeschwindigkeit, Wassergehalt und weiteren Probeneigenschaften.

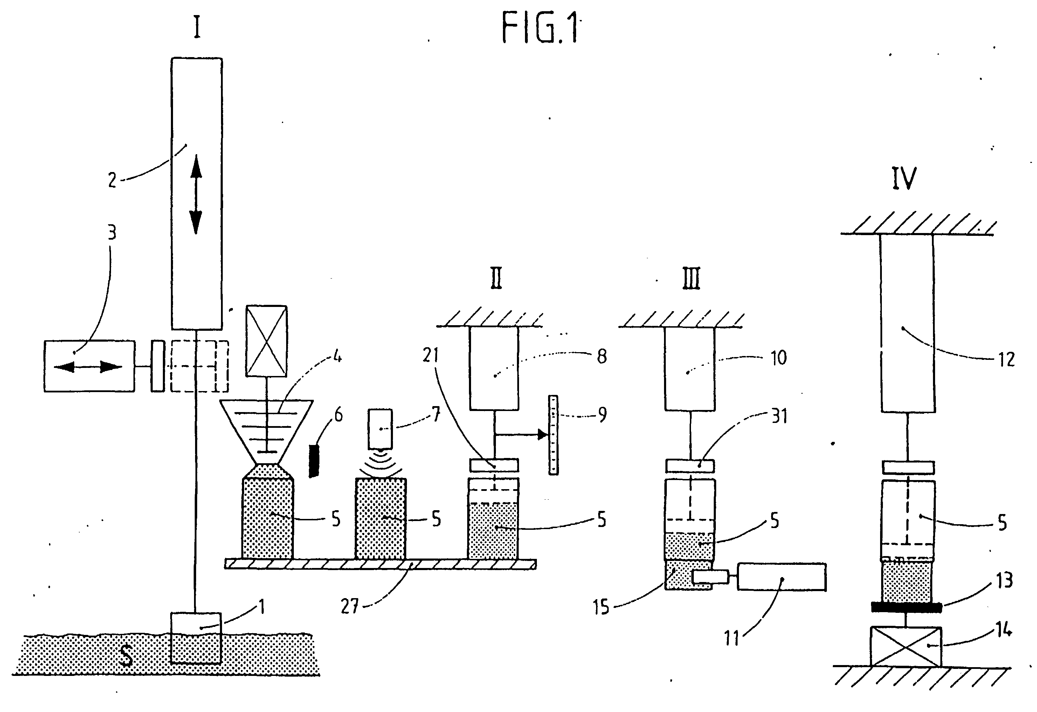

Es wird zunächst anhand der Figur 1 ein Beispiel einer konventionellen Prüfeinrichtung für Formsand beschrieben, welche in vorteilhafter Weise um die Merkmale der vorliegenden Erfindung ergänzt werden kann.

Man erkennt links in Figur 1 einen Probenehmer 1, der aus einem Sandbett S eine Sandprobe entnimmt. Der Probenehmer 1 wird durch einen Hubzylinder 2 betätigt, wobei die Sandprobe zu einem Ausstoßzylinder 3 angehoben und von dort in einen Zerhackertrichter 4 oder auf ein entsprechendes Sieb entleert wird. Von dort wird der Sand in eine unter dem Zerhackertrichter 4 angeordnete und auf einer Grundplatte 27 stehende, zylindrische Prüfhülse 5 gefüllt, die oben und unten offen ist, jedoch durch die Grundplatte 27 auf ihrer Unterseite verschlossen wird. Die vom Probenehmer 1 in den Trichter 4 bzw. auf ein entsprechendes Sieb gegebene Sandmenge wird so bemessen, daß die Prüfhülse 5 gut gefüllt ist. Anschließend wird die Hülse 5 auf der Platte 27 nach rechts verschoben, wobei die Platte 27 ggf. auch ein Drehteller oder ein Gliederband oder dergleichen sein kann, welche die Hülse mitnimmt zu einem Füllstandsmesser 7. Auf dem Weg zu dem Füllstandsmesser 7 läuft die Hülse 5 unter einem Abstreifer 6 hinweg, der überschüssigen, über die obere Kante der Prüfhülse 5 hinaus angehäuften Sand abstreift, so daß die Sandoberfläche in der Prüfhülse 5 genau mit der Oberkante der Prüfhülse 5 abschließt. Dies wird mit dem Füllstandsmesser 7 überprüft. Die so gefüllte Prüfhülse 5 wird anschließend weiterbewegt zu einer Verdichtungsstation II, in welcher ein auf die Innenmaße der Prüfhülse 5 abgestimmter Verdichtungssempel 21 über einen hydraulischen Verdichtungszylinder 8 auf die Sandoberfläche in der Prüfhülse 5 abgesenkt wird. Der Sand wird über den Stempel 21 mit einem durch die hydraulische Einrichtung 8 exakt vorgebbaren Druck belastet, wobei die Verdichtbarkeit sich aus der Volumenänderung des Sandes ergibt, d.h. konkret aus dem Weg, welcher von dem Stempel 21 in dem Prüfzylinder 5 zurückgelegt wird, im Verhältnis zur Höhe des Prüfzylinders. Eine entsprechende Wegstreckenmeßeinrichtung 9 ist an der Verdichtungsstation 2 vorgesehen.

Es versteht sich, daß die Platte 27 dabei als Gegendruckplatte wirkt und in der Verdichtungsstation entsprechend abgestützt ist.

Wie noch beschrieben wird, ist ein Ultraschallmeßsystem in dieser Verdichtungsstation II angeordnet.

Die Hülse 5 mit dem verdichteten Prüfkörper wird anschließend weiterbewegt zu einer Station III für die Messung der Scherfestigkeit des Prüfkörpers. Hierzu wird der Prüfkörper 15 durch einen weiteren Stempel 31 ein Stück weit nach unten aus der Prüfhülse 5 herausgedrückt und der aus der Prüfhülse 5 herausstehende Teil des Prüfkörpers 15 wird anschließend durch eine Gabel 11 in seitlicher Richtung abgeschert, wobei die dafür erforderlichen Kräfte an der Gabel bzw. der Gabelhalterung gemessen werden. Alternativ zur Messung der Scherfestigkeit kann auch eine Messung der Druckfestigkeit erfolgen, wie dies in der Station IV in Figur 1 dargestellt ist. Dabei drückt ebenfalls ein Stempel, der von dem Zylinder 12 angetrieben wird, den Prüfkörper 15 vollständig aus der Hülse 5 heraus, wobei dieser auf eine Gegendruckplatte 13 aufgesetzt und unter der fortgesetzten Abwärtsbewegung des Stempels zerdrückt wird. Die dabei auf die Gegendruckplatte 13 wirkenden Kräfte werden durch einen Kraftaufnehmer 14 ermittelt.

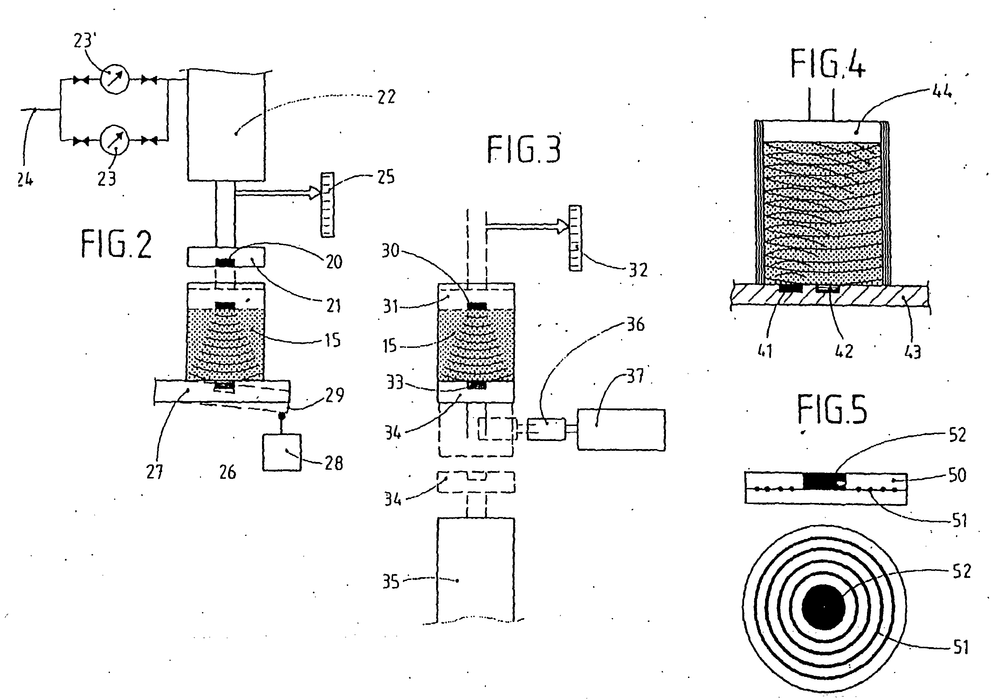

Figur 2 stellt schematisch die Möglichkeit dar, wie ein Ultraschallmeßsystem, beispielsweise an der vorstehend beschriebenen Verdichtungsstation II, verwirklicht werden kann. Der Verdichtungsstempel 21 weist zu diesem Zweck an seiner mit dem Sand in Berührung tretenden Vorderfläche eine Aussparung auf, in welcher passend ein Ultraschallwandler 20 aufgenommen ist, so daß dessen Vorderfläche bündig mit der Vorderfläche des Stempels 21 abschließt. Elektrische Anschlüsse auf der Rückseite des Ultraschallwandlers sind in Figur 2 nicht dargestellt, können jedoch in an sich bekannter Weise durch Bohrungen in der Rückseite des Stempels 21 verkabelt werden.

In der Gegendruckplatte 27 ist in analoger Weise zu dem Stempel 21 ebenfalls ein Ultraschallwandler 26 in einer passenden Aussparung aufgenommen, dessen dem Prüfkörper 15 zugewandte Oberfläche ebenfalls bündig mit der Oberfläche der Platte 27 abschließt. Die Gegendruckplatte 27 kann, wie durch eine gestrichelte Linie angedeutet, mit Hilfe eines Hubelementes 28 in die Position 29 nach unten verschwenkt werden, so daß der Prüfkörper 15 in der Prüfhülse, die beispielsweise an einem Tragarm befestigt ist, nach Abschluß der Messungen an der Verdichtungsstation ohne Berührung der Platte 27 weitertransportiert werden kann, um eventuellen Reibungsverschleiß an der Oberfläche des Wandlers 26 zu vermeiden.

Der Hydraulikzylinder 22 ist über zwei verschiedene Druckregelventile 23, 23', von der Versorgungsleitung 24 her mit Druck beaufschlagbar. Eines der beiden Druckregelventile 23, 23' tritt in Aktion für die Messung der Verdichtbarkeit, wobei der Weg, um welchen der Stempel 21 in die Hülse 5 eindringt, an der Skala 25 abgelesen, ggf. auch automatisch erfaßt werden kann. Anschließend wird das andere Druckregelventil 23' aktiviert, das einen etwas geringeren Druck in dem Hydraulikzylinder 22 vorsieht, so daß der Stempel 21 mit einem etwas geringeren Druck auf die Oberfläche des Prüfkörpers 15 drückt. In diesem Zustand wird die Ultraschallmessung am Prüfkörper vorgenommen, wobei beispielsweise der Wandler 20 als Sender und der Wandler 26 als Empfänger dient. Die Meßelektronik für derartige Ultraschallwandler ist im Prinzip bekannt und braucht daher nicht beschrieben zu werden. Gemessen werden insbesondere die Laufzeit der Ultraschallimpulse durch den Prüfkörper 15, wobei man aus der Höhe des Prüfkörpers 15, die sich aus der Höhe der Prüfhülse 5 und dem Verdichtungsweg des Stempels 21 ergibt, auch die Ultraschallgeschwindigkeit errechnen kann. Weiterhin kann auch die Dämpfung der Ultraschallwelle erfaßt werden, vorzugsweise indem man nacheinander ein oder mehrere zwischen den Flächen des Stempels 21 und Oberfläche der Gegendruckplatte 27 hin- und herlaufende, aufeinanderfolgende Echos eines kurzen Ultraschallimpulses erfaßt.

Nach dem Abschluß der Ultraschallmessung wird der Stempel 21 mit dem Ultraschallwandler 20 aus der Hülse 5 zurückgezogen, und die Gegendruckplatte 27 wird nach unten verschwenkt bzw. gebogen, so daß der Prüfkörper 15 mit der Prüfhülse 5 berührungsfrei zur nächsten Station gebracht werden kann.

Figur 3 zeigt eine Station für eine Messung der Scherfestigkeit des Prüfkörpers 15, wobei diese Station ebenfalls um eine Ultraschallmeßvorrichtung ergänzt ist. Der beispielsweise in einer Station gemäß II in Figur 1 vorverdichtete Prüfkörper 15 wird in der Prüfhülse 5 an die Station zur Messung der Scherfestigkeit übergeben. Vor der Messung der Scherfestigkeit wird zunächst ein Stempel 34 an die untere Stirnfläche des zylindrischen Prüfkörpers gedrückt, während von oben ein Stempel 31 in die Prüfhülse 5 und auf die Oberfläche des Prüfkörpers 15 abgesenkt wird. Beide Stempel 31 und 34 weisen jeweils einen bündig mit ihrer Oberfläche abschließenden Ultraschallwandler 30, 33 auf, deren Verdrahtung und elektrische Anschlüsse wiederum nicht dargestellt sind. Der Stempel 31 wird mit einem definierten Druck auf die Sandobefläche abgesenkt, da ein gleichmäßiger Druck die Vergleichbarkeit der Meßergebnisse erleichtert, wenn auch eine solche Bedingung nicht unverzichtbar ist, sofern in einer entsprechenden Versuchsreihe die Druckabhängigkeit derartiger Meßergebnisse erfaßt wurde.

Die Skala 32 hilft dabei, die Höhe des Prüfkörpers 15 zu erfassen, um den Laufweg für den Ultraschallimpuls durch den Prüfkörper 15 hindurch festzulegen. Die Höhe des Prüfkörpers kann allerdings auch als Meßergebnis von der vorangehenden Verdichtunsstation übernommen werden.

Nachdem die Ultraschallmessung durchgeführt worden ist, wird der Stempel 34 mit Hilfe des hydraulischen Zylinders 35 weiter nach unten abgesenkt, während der Stempel 31 den Prüfkörper 15 um eine vorgebbare Stecke nach unten aus der Prüfhülse 15 herausdrückt, so daß er von der Schergabel 36 erfaßt werden kann. Das Vorschubsystem 37 für die Schergabel erfaßt beim Abscheren des nach unten aus der Prüfhülse 5 hervorstehenden Teiles des Prüfkörpers 15 die dabei auf die Gabel 36 wirkenden Kräfte.

In analoger Weise können die Ultraschallwandler auch an einer Station für die Messung der Druckfestigkeit vorgesehen sein, wie sie unter IV in Figur 1 dargestellt ist. Auch in diesem Fall könnte im Stempel 13 ebenso wie in dem von oben absenkbaren Stempel jeweils ein Ultraschallwandler vorgesehen sein, wobei zweckmäßigerweise der Stempel 13 soweit nach oben bewegt werden müßte, daß er die Unterseite der Prüfhülse 5 verschließt. Stattdessen kann allerdings auch unabhängig von dem Stempel 13 eine Gegendruckplatte an der Unterseite der Hülse 5 angeordnet werden, welche den Ultraschallwandler aufnimmt und ggf. von der Hülse 5 weg verschwenkt werden kann.

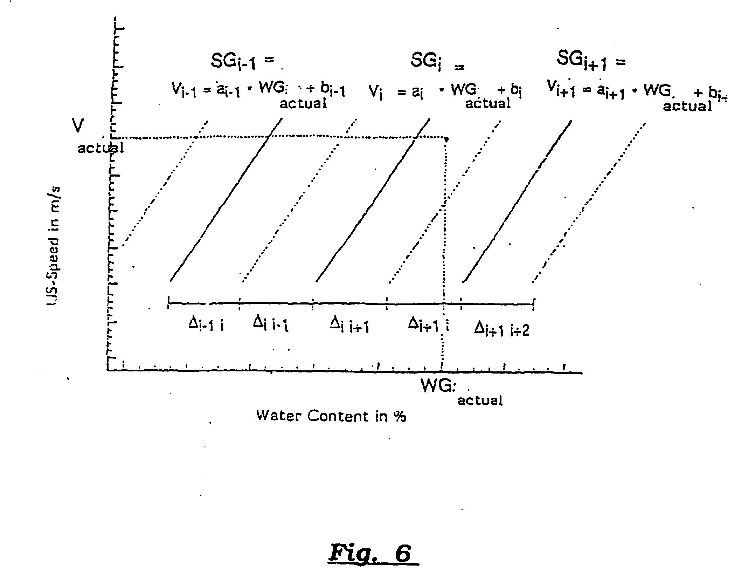

In Figur 4 ist eine Variante dargestellt, bei welcher in einer Gegendruckplatte 43 zwei Ultraschallwandler 41, 42 nebeneinander an der Unterseite eines Prüfkörpers 15 angeordnet sind. Die von dem Ultraschallwandler 41 ausgehenden Ultraschallwellen werden sowohl von den Wänden der Prüfhülse 15, vor allem aber auch von einem an der Oberseite des Prüfkörpers 15 aufliegenden Stempel 44 reflektiert und von dem Wandler 42 empfangen. Aus der Laufzeit und Höhe des Prüfkörpers ermittelt man wiederum die Ultraschallgeschwindigkeit. In einer weiteren Variante könnten die Wandler 41 und 42 identisch sein, d.h. ein einzelner Wandler 41 würde sowohl als Sender als auch als Empfänger fungieren, was durch an sich bekannte elektronische Verschaltung der Anschlüsse des Wandlers ohne weiteres möglich ist.

In Figur 5 ist ein Stempel bzw. eine Platte 50 dargestellt, in welcher ein Ultraschallwandler 52 so aufgenommen ist, daß seine Oberfläche bündig mit der Oberfläche der Platte 50 abschließt. Gleichzeitig ist in die Platte 50 eine den Ultraschallwandler 52 umgebende Heizwicklung 51 eingelassen, mit deren Hilfe die Platte 50 erwärmt werden kann, so daß Anbackungen des Formsandes vermieden werden, die dadurch entstehen können, daß sich unter der wechselnden Druckbeaufschlagung auf den Stempeln bzw. Platten Kondensat niederschlägt.

Die erfindungsgemäße Vorrichtung ermöglicht zusammen mit bereits bekannten Prüfeinrichtungen, wie z.B. Verdichtungs-, Scherfestigkeits- und Druckfestigkeits-Meßstationen eine vollständigere und schnellere Erfassung aller wesentlichen Eigenschaften des Formsandes als dies mit den bisher bekannten automatischen Prüfeinrichtungen möglich war. Insbesondere erspart die Verbindung der Ultraschallmessung mit den vorgenannten weiteren Prüfmethoden eine quantiavie Analyse der Formsandzusammensetzung, da auch die Ultraschallmessungen zumindest in Verbindung mit den übrigen, einfach zu messenden Eigenschaften, wie Verdichtbarkeit und Scherfestigkeit, bereits hinreichend Aufschluß über die Zusammensetzung des Formsandes geben. Dabei brauchen lediglich einmal anhand entsprechender Meßreihen die Zusammenhänge zwischen den Ultraschallergebnissen und der jeweiligen Zusammensetzung erfaßt werden, so daß man anschließend aus den Ultraschallergebnissen auf die Zusammensetzung rückschließen kann. Dabei ist selbstverständlich auch zu beachten, daß es unterschiedliche Typen von Bindemitteln in Formsanden gibt.

Die erfindungsgemäße Vorrichtung kann naturgemäß auch in anderen Produktionsverfahren, z.B. für keramische Massen, bodenmechanische Prüfungen, Baustoffe etc., eingesetzt werden. Aus den drei interessierenden Größen: Wassergehalt, Verdichtbarkeit und Ultraschallgeschwindigkeit werden die Daten zur prozeßbegleitenden Steuerung formtechnologischer Eigenschaften des Formstoffsystems abgeleitet:

- Schlämmstoffgehalt:

Aus der Ultraschallgeschwindigkeit wird über Ausgleichsgeraden in Verbindung mit dem Wasser- gehalt der Schlämmstoffgehalt ermittelt, Figur 6. Die Erstellung der Ausgleichsgeraden erfolgt mit Hilfe von Testmischungen bekannter Zusammensetzung aus dem zu untersuchenden Form-stoffsystem. Dabei werden die üblichen Interpolationsmethoden verwendet;
Figur 6: Schlämmstoffgehaltbestimmung:

-    Meßwerte $WG_{ist}$, $V_{ist}$
-    Ausgleichsgeraden:

$$SG_{i-1} = V_{i-1} = a_{i-1} * WG_{ist} + b_{i-1} ;$$

$$SG_i = V_i = a_i * WG_{ist} + b_i;$$

$$SG_{i+1} = V_{i+1} = a_{i+1} * WG_{ist} + b_{i+1}$$

- Streubänder zwischen den einzelnen Ausgleichsgeraden:

$$\Delta_{i-1\,i} = \Delta_{i\,i-1} = (V_{i-1} - V_i) / 2$$

$$\Delta_{i+1\,i} = \Delta_{i\,i+1} = (V_i - V_{i+1}) / 2$$

- Vergleich:

$$V_i - \Delta_{i\,i+1} < V_{ist} < V_i + \Delta_{i\,i-1}$$

- Schlußfolgerung:

$$SG_{ist} = SG_i$$

- Aktivtonbestimmung

Aus der Verdichtbarkeit wird über Äusgleichsgeraden in Verbindung mit dem Wassergehalt und beim bekannten Schlämmstoffgehalt der Aktivtongehalt ermittelt. Bei der Erstellung der Ausgleichsgeraden wird zusätzlich ein schlämmstoffbedingter Kompensationsfaktor ermittelt.

Nach der Ausrechnung des Ist-Zustandes erfolgt ein Vergleich mit den Sollwerten. Vom Prozeßrechner werden entsprechende Stellimpulse an die Dosiereinrichtung gegeben, und es erfolgt die Zusammenstellung der Mischcharge aus Gießerei-Altsand, Formgrundstoff, Ton und Wasser.

**Patentansprüche**

1. Verfahren zum Bestimmen der Eigenschaften und/oder Zusammensetzung von Gießereiformsand, wobei diese Bestimmung dadurch durchgeführt wird, daß zunächst eine Probe der Zusammensetzung kompaktiert bzw. zusammengedrückt wird und die Länge der so zusammengedrückten Probe entlang zumindest einer Richtung bestimmt wird und das Fortschreiten von elastischen Wellen mit Hilfe von Ultraschall gemessen wird, **dadurch gekennzeichnet, daß** das Fortschreiten und die Absorption von elastischen Wellen mit Hilfe von Ultraschall entlang dieser Richtung gemessen wird und daß diese Messung in Kombination mit zumindest einer weiteren Eigenschaft der Zusammensetzung verwendet wird, um zusätzliche Eigenschaften zu berechnen.

2. Verfahren nach Anspruch 1, **dadurch gekenn-** zeichnet, daß die elastischen und inelastischen bzw. Absorptions-Eigenschaften der Probe aus der Ultraschallgeschwindigkeit und den gemessenen Ultraschallamplituden bestimmt werden.

3. Verfahren nach Anspruch 1 oder 2, **dadurch gekennzeichnet, daß** Phase und Amplitude von Ultraschallwellen bei der Reflexion an einer oder mehreren Oberflächen der Probe bestimmt werden.

4. Verfahren nach einem der Ansprüche 1 bis 3, **dadurch gekennzeichnet, daß** je ein Ultraschallwandler (20, 26) auf gegenüberliegenden Seiten einer Probe angeordnet ist, von denen einer als Ultraschallsender und der andere als Ultraschallempfänger dient.

5. Verfahren nach einem der Ansprüche 1 bis 3, **dadurch gekennzeichnet, daß** zwei Ultraschallwandler (41, 42) nebeneinander an einer Fläche des Prüfkörpers vorgesehen sind, von denen mindestens einer als Empfänger für reflektierte Ultraschallwellen dient.

6. Verfahren nach einem der Ansprüche 1 bis 5, **dadurch gekennzeichnet, daß** die Ultraschallmessung mit einstellbarem Ankopplungsdruck der Ultraschallwandler an die Probe erfolgt.

7. Verfahren nach einem der Ansprüche 1 bis 6, **dadurch gekennzeichnet, daß** neben der Ultraschallmessung als weitere Meßgröße die Verdichtbarkeit der Probe ermittelt wird.

8. Verfahren nach einem der Ansprüche 1 bis 6, **dadurch gekennzeichnet, daß** neben der Ultraschallmessung als weitere physikalische Meßgröße der Wassergehalt der Probe ermittelt wird.

9. Verfahren nach einem der Ansprüche 1 bis 8, **dadurch gekennzeichnet, daß** neben der Ultraschallmessung als weitere Meßgröße der Gehalt der Probe an Binder und/oder Härter ermittelt wird.

10. Verfahren nach einem der Ansprüche 1 bis 9, **dadurch gekennzeichnet, daß** die Ermittlung der nicht unmittelbar gemessenen Eigenschaften und der Zusammensetzung der Probe aus den gemessenen Eigenschaften aufgrund eines empirischen, mathematischen Funktionszusammenhanges erfolgt.

11. Verfahren nach einem der Ansprüche 1 bis 9, **dadurch gekennzeichnet, daß** die Ermittlung der nicht direkt gemessenen Eigenschaften und Zusammensetzung der Probe aus den gemessenen Größen mit Hilfe von Eichtabellen, gegebenenfalls durch Interpolation erfolgt.

**12.** Verfahren nach einem der Ansprüche 1 bis 11, **dadurch gekennzeichnet, daß** diese Bestimmung durch Messung der elastischen und inelastischen Eigenschaften mittels Ultraschall unter Einbeziehung weiterer physikalischer und/oder technisch-technologischer Kennwerte erfolgt.

**13.** Verfahren nach Anspruch 12, wobei bei der Bestimmung der Qualität bzw. Zusammensetzung von tongebundenen Formstoffen mit der Messung der Ultraschallgeschwindigkeit bzw. -laufzeit, der Feuchte, Temperaturverdichtbarkeit Rückschlüsse über den Aktivtongehalt und den Schlämmstoffgehalt des Formstoffes und/oder Gießereialtsandes gezogen werden.

**14.** Verfahren nach Anspruch 12, wobei bei der Bestimmung der Formstoff bzw. Formqualität kunstharz- und wasserglasgebundener Formstoffe die Verfestigungsabläufe und die Zustandsermittlung über Verfolgung der Veränderung von Ultraschallkennwerten, wie z.B. Ultraschallgeschwindigkeit, an Formstoffproben bzw. Formen und Kernen aufgenommen werden.

**15.** Verfahren nach Anspruch 12, wobei bei der Bestimmung der Regeneratsqualität die Bestimmung über Ermittlung der Anteile an Störgrößen, wie z.B. Feinanteilen, mittels Ultraschallkennwerten, wie z.B. Ultraschallgeschwindigkeit oder -dämpfung, erfolgt.

**16.** Vorrichtung zum Bestimmen der Eigenschaften und/oder Zusammensetzung von Gießereiformsand, mit einer Probenentnahmeeinrichtung (1) und einer Prüfhülse (6), welche eine Formsandprobe, vorzugsweise in Form eines vorverdichteten Prüfkörpers (15) aufnimmt, wobei ein Verdichtungsstempel (21) und eine Druckplatte (27) für das Kompaktieren bzw. Zusammendrücken der Probe innerhalb der Hülse (5) vorgesehen ist, um eine zusammengedrückte Probe zu bilden, die ein erstes und ein zweites Ende und eine Seitenwand hat, die den Prüfkörper (15) definieren, wobei ein Ultraschallwandler (20) vorgesehen ist und eine Vorrichtung (25) zur Bestimmung des Abstandes zwischen dem ersten und dem zweiten Ende vorgesehen ist und daß eine Einrichtung zur Bestimmung der Durchtrittszeit eines Ultraschallpulses durch die Probe vorgesehen ist, **dadurch gekennzeichnet, daß** zumindest ein Ultraschallwandler an dem ersten Ende der Probe angeordnet ist und eine Einrichtung zur Messung der Absorption von elastischen Wellen mit Hilfe von Ultraschall vorgesehen ist, sowie eine Einrichtung zur Berechnung zusätzlicher Eigenschaften vorgesehen ist, die in Kombination mit der Absorption und zumindest einer weiteren Eigenschaft der Zusammensetzung ermittelt werden.

**17.** Vorrichtung nach Anspruch 16, **dadurch gekennzeichnet, daß** zwei Ultraschallwandler (30, 33) an gegenüberliegenden Seiten des Prüfkörpers (15) vorgesehen sind.

**18.** Vorrichtung nach Anspruch 16 oder 17, **dadurch gekennzeichnet, daß** der bzw. die Ultraschallwandler (30, 33) an einer bzw. beiden Stirnflächen eines zylindrischen Prüfkörpers (15) angeordnet sind.

**19.** Vorrichtung nach einem der Ansprüche 16 bis 18, **dadurch gekennzeichnet, daß** ein Ultraschallwandler in einem Verdichtungsstempel (21) undloder einer dem Verdichtungsstempel (21) gegenüberliegenden Druckplatte (27) vorgesehen sind.

**20.** Vorrichtung nach einem der Ansprüche 16 bis 18, **dadurch gekennzeichnet, daß** die Ultraschallwandler an Flächen angeordnet sind, welche von den den Verdichtungsdruck aufnehmenden Flächen getrennt sind.

**21.** Vorrichtung nach einem der Ansprüche 16 bis 20, **dadurch gekennzeichnet, daß** die die Ultraschallwandler tragenden Flächen bzw. Teile in Richtung auf den Prüfkörper zu und von diesem wegbewegbar sind.

**22.** Vorrichtung nach Anspruch 19, **dadurch gekennzeichnet, daß** ein Druckregler mit mindestens zwei Druckstufen für den Druck des Verdichtungsstempels vorgesehen ist.

**23.** Vorrichtung nach einem der Ansprüche 16 bis 22, **dadurch gekennzeichnet, daß** die auf den Prüfkörper Druck ausübenden Flächen mindestens teilweise heizbar sind.

**24.** Vorrichtung nach einem der Ansprüche 16 bis 23, **dadurch gekennzeichnet, daß** zwei Ultraschallwandler auf einer Fläche nebeneinander und gegenüber von einer reflektierenden Fläche angeordnet sind.

**Claims**

**1.** A method of determining the properties and/or composition of foundry moulding sand, wherein said determining operation is effected by firstly a sample of the composition being compacted or compressed and the length of the sample compressed in that way being determined in at least one direction and the progression of elastic waves being measured by means of ultrasound, **characterised in that** the progression and absorption of elastic waves is measured by means of ultrasound along said direction and said measurement is used in combination with at least one further property of the composition in order to calculate additional properties.

2. A method according to claim 1 **characterised in that** the elastic and inelastic or absorption properties of the sample are determined from the ultrasound speed and the measured ultrasound amplitudes.

3. A method according to claim 1 or claim 2 **characterised in that** the phase and amplitude of ultrasound waves are determined upon reflection at one or more surfaces of the sample.

4. A method according to one of claims 1 to 3 **characterised in that** a respective ultrasonic transducer (20, 26) is arranged on opposite sides of a sample, of which one serves as an ultrasonic transmitter and the other as an ultrasonic receiver.

5. A method according to one of claims 1 to 3 **characterised in that** there are provided two ultrasonic transducers (41, 42) in mutually juxtaposed relationship on a surface of the test body, of which at least one serves as a receiver for reflected ultrasound waves.

6. A method according to one of claims 1 to 5 **characterised in that** ultrasound measurement is effected with an adjustable coupling pressure of the ultrasonic transducers to the sample.

7. A method according to one of claims 1 to 6 **characterised in that** the compactability of the sample is ascertained as a further measurement parameter besides ultrasound measurement.

8. A method according to one of claims 1 to 6 **characterised in that** the water content of the sample is ascertained as a further physical measurement parameter besides ultrasound measurement.

9. A method according to one of claims 1 to 8 **characterised in that** the content of the sample of binder and/or hardener is ascertained as a further measurement parameter besides ultrasound measurement.

10. A method according to one of claims 1 to 9 **characterised in that** the operation of determining the properties which are not directly measured and the composition of the sample is effected from the measured properties on the basis of an empirical mathematical functional relationship.

11. A method according to one of claims 1 to 9 **characterised in that** the operation of ascertaining the composition and properties which are not directly measured of the sample is effected from the measured parameters by means of calibration tables, possibly by interpolation.

12. A method according to one of claims 1 to 11 **characterised in that** said determining operation is effected by measurement of the elastic and inelastic properties by means of ultrasound, with the incorporation of further physical and/or technical-technological characteristic values.

13. A method according to claim 12 wherein when determining the quality or composition of clay-bound moulding materials, with the measurement of ultrasound speed or transit time, moisture content, temperature compactability, conclusions are drawn about the active clay content and the washing substance content of the moulding material and/or the used foundry sand.

14. A method according to claim 12 wherein in the operation of determining the moulding material or mould quality of synthetic resin-bound and water glass-bound moulding materials the consolidation procedures and the condition-ascertaining operation are recorded by way of tracking the variation in ultrasonic characteristic values such as for example ultrasound speed on moulding material samples or moulds and cores.

15. A method according to claim 12 wherein in the operation of determining the regenerate quality the determining operation is effected by way of ascertaining the proportions of disturbance variables, such as for example fine proportions, by means of ultrasonic characteristic values such as for example ultrasound speed or damping.

16. Apparatus for determining the properties and/or composition of foundry moulding sand, comprising a sampling device (1) and a testing case (6) which receives a moulding sand sample, preferably in the form of a pre-compacted test body (15), wherein there are provided a compacting ram (21) and a pressure plate (27) for compacting or compressing the sample within the case (5) in order to form a compressed sample which has a first and a second end and a side wall which define the test body (15), wherein there is provided an ultrasonic transducer (20) and a device (25) for determining the spacing between the first and second ends and that there is provided a device for determining the transit time of an ultrasonic pulse through the sample, **characterised in that** at least one ultrasonic transducer is arranged at the first end of the sample and there is provided a device for measuring the absorption of elastic waves by means of ultrasound, and a device for calculating additional properties which are ascertained in combination with the absorption and at least one further property of the composition.

17. Apparatus according to claim 16 **characterised in that** there are provided two ultrasonic transducers (30, 33) at opposite sides of the test body (15).

18. Apparatus according to claim 16 or claim 17 **characterised in that** the ultrasonic transducer or transducers (30, 33) is or are arranged at one or both end faces of a cylindrical test body (15).

19. Apparatus according to one of claims 16 to 18 **characterised in that** there is provided an ultrasonic transducer in a compacting ram (21) and/or a pressure plate (27) in opposite relationship to the compacting ram (21).

20. Apparatus according to one of claims 16 to 18 **characterised in that** the ultrasonic transducers are arranged at faces which are separate from the faces receiving the compacting pressure.

21. Apparatus according to one of claims 16 to 20 **characterised in that** the faces or parts which carry the ultrasonic transducers are movable towards and away from the test body.

22. Apparatus according to claim 19 **characterised in that** there is provided a pressure regulator with at least two pressure stages for the pressure of the compacting ram.

23. Apparatus according to one of claims 16 to 22 **characterised in that** the faces which apply pressure to the test body are at least partially heatable.

24. Apparatus according to one of claims 16 to 23 **characterised in that** two ultrasonic transducers are arranged on a face in mutually juxtaposed relationship and in opposite relationship to a reflecting face.

**Revendications**

1. Procédé pour déterminer les propriétés et/ou la composition d'un sable de fonderie, cette détermination étant effectuée par le fait que l'on procède d'abord à un compactage ou à un écrasement d'un échantillon de la composition, et on détermine la longueur de l'échantillon ainsi écrasé, le long d'au moins une direction, et on mesure la propagation d'ondes élastiques à l'aide d'ultrasons, **caractérisé en ce qu'**on mesure la propagation et l'absorption d'ondes élastiques à l'aide d'ultrasons le long de cette direction, et que cette mesure est utilisée en combinaison avec au moins une autre propriété de la composition, pour calculer des propriétés additionnelles.

2. Procédé selon la revendication 1, **caractérisé en ce que** les propriétés élastiques et inélastiques, ou d'absorption, de l'échantillon sont déterminées à partir de la vitesse des ultrasons et de l'amplitude mesurée des ultrasons.

3. Procédé selon la revendication 1 ou 2, **caractérisé en ce que** la phase et l'amplitude des ondes ultrasoniques sont déterminées lors de leur réflexion sur une ou plusieurs surfaces de l'échantillon.

4. Procédé selon l'une des revendications 1 à 3, **caractérisé en ce qu'**un convertisseur d'ultrasons (20, 26) est disposé sur chacune des faces opposées d'un échantillon, convertisseurs dont l'un sert d'émetteur d'ultrasons et l'autre de récepteur d'ultrasons.

5. Procédé selon l'une des revendications 1 à 3, **caractérisé en ce qu'**on prévoit l'un à côté de l'autre, sur une surface de l'éprouvette, deux convertisseurs d'ultrasons (41, 42), dont au moins l'un sert de récepteur d'ondes ultrasoniques réfléchies.

6. Procédé selon l'une des revendications 1 à 5, **caractérisé en ce que** la mesure des ultrasons s'effectue par une pression, réglable, de couplage des convertisseurs d'ultrasons à l'échantillon.

7. Procédé selon l'une des revendications 1 à 6, **caractérisé en ce que**, outre la mesure des ultrasons, on détermine en tant qu'autre grandeur de mesure l'aptitude de l'échantillon au compactage.

8. Procédé selon l'une des revendications 1 à 6, **caractérisé en ce que**, outre la mesure des ultrasons, on détermine en tant qu'autre grandeur de mesure physique la teneur en eau de l'échantillon.

9. Procédé selon l'une des revendications 1 à 8, **caractérisé en ce que**, outre la mesure des ultrasons, on détermine en tant qu'autre grandeur de mesure la teneur de l'échantillon en liant et/ou durcisseur.

10. Procédé selon l'une des revendications 1 à 9, **caractérisé en ce que** la détermination des propriétés non directement mesurées et de la composition de l'échantillon s'effectue à partir des propriétés mesurées, sur la base d'une relation fonctionnelle mathématique empirique.

11. Procédé selon l'une des revendications 1 à 9, **caractérisé en ce que** la détermination des propriétés non directement mesurées et de la composition de l'échantillon s'effectue à partir des grandeurs mesurées, à l'aide de tables d'étalonnage, éventuellement par interpolation.

**12.** Procédé selon l'une des revendications 1 à 11, **caractérisé en ce que** cette détermination est effectuée par mesure des propriétés élastiques et inélastiques, au moyen d'ultrasons, en prenant en compte d'autres paramètres physiques et/ou technico-technologiques.

**13.** Procédé selon la revendication 12, dans lequel, lors de la détermination de la qualité ou de la composition de produits moulés liés à l'argile par une mesure de la vitesse ou de la durée des ultrasons, de l'humidité, de l'aptitude au compactage en fonction de la température, on tire des conclusions quant à la teneur en argile active et à la teneur en sédiments du matériau du moule et/ou du sable de fonderie usé.

**14.** Procédé selon la revendication 12, dans lequel, lors de la détermination du matériau ou de la qualité des matériaux de moule liés à une résine synthétique ou à du silicate de soude, on enregistre l'évolution de la consolidation et la détermination de l'état, en suivant la variation des caractéristiques des ultrasons, notamment la vitesse des ultrasons, sur des échantillons de matériaux de moule, ou encore des moules et des noyaux.

**15.** Procédé selon la revendication 12, dans lequel, lors de la détermination de la qualité des régénérats, la détermination s'effectue par détermination des proportions des grandeurs perturbatrices, telles par exemple que la proportion des fines, par des valeurs caractéristiques des ultrasons telles par exemple que la vitesse ou l'amortissement des ultrasons.

**16.** Appareillage pour déterminer les propriétés et/ou la composition d'un sable de fonderie, comportant un dispositif (1) de prélèvement d'échantillon et un manchon d'essai (6), qui reçoit un échantillon de sable de fonderie, de préférence sous forme d'une éprouvette précompactée (15), un poinçon de compactage (21) et une plaque de compression (27) étant prévus pour compacter ou écraser l'échantillon à l'intérieur du manchon (5), pour former un échantillon écrasé, qui a une première et une deuxième extrémités et une paroi latérale, qui définissent une éprouvette (15), un convertisseur d'ultrasons (20) étant prévu, et un dispositif (25) étant prévu pour déterminer la distance entre la première et la deuxième extrémités, un dispositif étant prévu pour déterminer le temps de passage d'une impulsion ultrasonique à travers l'échantillon, **caractérisé en ce qu'**au moins un convertisseur d'ultrasons est rapporté à la première extrémité de l'échantillon, et un dispositif est prévu pour mesurer l'absorption d'ondes élastiques à l'aide d'ultrasons, un dispositif étant en outre prévu pour calculer des propriétés additionnelles, qui sont déterminées en combinaison avec l'absorption et au moins une autre propriété de la composition.

**17.** Appareillage selon la revendication 16, **caractérisé en ce que** deux convertisseurs d'ultrasons (30, 33) sont prévus sur les faces opposées de l'éprouvette (15).

**18.** Appareillage selon la revendication 16 ou 17, **caractérisé en ce que** le ou les convertisseurs d'ultrasons (30, 33) sont disposés respectivement contre l'une des faces frontales d'une éprouvette cylindrique (15), ou contre les deux faces cylindriques de cette éprouvette.

**19.** Appareillage selon l'une des revendications 16 à 18, **caractérisé en ce qu'**un convertisseur d'ultrasons est prévu dans un poinçon de compactage (21) et/ou dans une plaque de compression (27) opposée au poinçon de compactage (21).

**20.** Appareillage selon l'une des revendications 16 à 18, **caractérisé en ce que** les convertisseurs d'ultrasons sont disposés sur des surfaces qui sont distinctes des surfaces qui reçoivent la pression de compactage.

**21.** Appareillage selon l'une des revendications 16 à 20, **caractérisé en ce que** les surfaces ou pièces portant les convertisseurs d'ultrasons peuvent se déplacer dans la direction allant vers l'éprouvette et s'en éloignant.

**22.** Appareillage selon la revendication 19, **caractérisé en ce qu'**un régulateur de pression est prévu, avec au moins deux étages de pression pour la pression du poinçon de compactage.

**23.** Appareillage selon l'une des revendications 16 à 22, **caractérisé en ce que** les surfaces exerçant une pression sur l'éprouvette sont au moins partiellement chauffables.

**24.** Appareillage selon l'une des revendications 16 à 23, **caractérisé en ce que** deux convertisseurs d'ultrasons sont disposés sur une surface, l'un à côté de l'autre, et d'une manière opposée à une surface réfléchissante.

FIG.1

FIG.4

FIG.5

FIG.3

FIG.2

*Fig. 6*